# EUROPEAN PATENT APPLICATION

(11) **EP 4 530 837 A1**
(43) Date of publication of application: **02.04.2025**
(21) Application number: 23200892.0
(22) Date of filing: 29.09.2023
(51) Int. Cl.: G06F 9/445, G06F 9/54

(54) **A METHOD FOR CONFIGURING A SOFTWARE INSTALLED ON A DEVICE COMPONENT OF AN ELECTRONIC COMPUTING DEVICE, COMPUTER PROGRAM PRODUCT, COMPUTER-READABLE STORAGE MEDIUM, AS WELL AS ELECTRONIC CONFIGURATION SYSTEM**

(71) Applicant: Siemens Aktiengesellschaft, 80333 München (DE)
(72) Inventor: Andreo, Sebastien, 91056 Erlangen (DE); Hohenstein, Uwe, 85591 Vaterstetten (DE)
(74) Representative: Siemens Patent Attorneys

(57) **Abstract**

The invention relates to a method for configuring a software installed on a device component (12, 14) of an electronic computing device (16) by a configuration system (10), comprising the steps of: providing a configuration setup (20) for the software for the device component (12, 14) by an online network (22); receiving and storing the configuration setup (20) by a backend (18) of the configuration system (10); requesting the configuration setup (20) from the backend (18) by a configuration handler (26) of the electronic computing device (16); providing the configuration setup (20) for the device component (12, 14) by the configuration handler (26); and configuring the device component (12, 14) depending on the provided configuration setup (20) by the device component (12, 14). Furthermore, the invention relates to a computer program product, a computer-readable storage medium, as well as to a configuration system (10) .

## Description

The present invention relates to a method for configuring a software installed on a device component of an electronic computing device by a configuration system according to the pending claim 1. Furthermore, the present invention relates to a computer program product, a computer-readable storage medium, as well as to a configuration system.

In the context of industrial Internet of Things and edge computing, there are often computing devices that run some installed software on the hardware. Quite often, these computing devices are not accessible from the internet, whereas the computing device is able to connect to the internet in the other direction.

It is usually assumed that the electronic computing device is accessible via the internet or the device component possesses and interface for enabling a configuration from the outside. Indeed, this does not work if no network connection to the computing from the internet is possible.

Another possible solution is to securely log into the computing device and to configure locally and directly. This requires access from outside or must be done at the device location. Furthermore, secure remote desktop access is well-known.

It is an object of the present invention to provide a method, a computer program product, a computer-readable storage medium as well as a configuration system, by which a configuration of a software installed on a device component of an electronic computing device is realized in an improved manner.

This object is solved by a method, a computer program product, a computer-readable storage medium, as well as a configuration system according to the independent claims. Advantageous embodiments are presented in the dependent claims.

One aspect of the invention relates to a method for configuring a software installed on a device component of an electronic computing device by a configuration system. A configuration setup for the software for the device component is provided by an online network. The configuration set up is received and stored by a backend of the configuration system. The configuration setup is requested from the backend by a configuration handler of the electronic computing device. The configuration setup is provided for the device component by the configuration handler. The device component is configuring the software depending on the provided configuration setup by the device component.

Therefore, the invention presents an approach to configure software on such computing devices, for example to adjust some parameters or restart one or several applications that behave badly on the device. An electronic computing device may be any device, such as a computer, an industrial PC, a Rasperry, or other computing units. In particular, the electronic computing device is configured for not having a persistent communication with the online network. An electronic computing device might also be a part of an embedded hardware. The device component may be a piece of software that runs on the electronic computing device to fulfil a certain task with the electronic computing device. The configuration setup will be some data required by a device component to adjust its behavior for instance, some thresholds or time intervals or to enforce a restart. The online network may be for example the internet or other network communications.

In particular, the present invention allows for externally providing configurations. The proposed solution uses the backend as a new component running on a separate computer, maybe hosted in the cloud. The backend possesses a publicly available but secured service that can be asked for a configuration. Furthermore, configuration data for the device component on the electronic computing device can be sent to the backend service, which then persists the configuration data locally. Furthermore, the new component as the configuration handler is installed on the device component and/or the electronic computing device that periodically pulls the configuration setup/data from the backend. A request from the configuration handler to the backend may return not modified, whenever a configuration has not been changed, wherein this can be determined by the last modified time stamp. Otherwise, a package with all configurations for the electronic computing device is returned. As already explained, the configuration handler may call the backend service periodically, in particular initially after restart of the configuration handler. Whenever a successful response is received, the package data is analyzed by the configuration handler and internally distributed to all device components running on the electronic computing device.

Compared to other approaches according to the state of the art the computing device can be secured but not being accessible from the internet while still obtaining configuration changes. Moreover, the configuration can be done at any time and outside of the computing of the electronic computing device, not necessarily at the electronic computing device location. Even access via an external device is not required.

According to an embodiment the configuration handler requests periodically the backend for the configuration setup.

Therefore, the backend is "always" connected to the online network. The configuration handler requests periodically the configuration setup for the backend. Therefore, the configuration setup can be requested in a frequent manner without being connected/accessible to the online network. Therefore, a secure way for configuring the software is provided.

In another embodiment the backend is separately provided to the electronic computing device. In particular, the backend is an own electronic computing device, which is interconnected between the electronic computing device and the online network. Therefore, a secure way for configuring the software installed on the device component is provided.

In another embodiment after a restart of the device component a request for the configuration set up is transmitted from the device component to the configuration handler. In particular, the device component can explicitly ask for its latest configuration, for example after the restart to obtain potential new configurations. Therefore, the device component has to publish a corresponding message to for example a message queue, passing its unique name in the topic/identifier. The configuration handler listens to those requests and reacts by issuing a request to the backend service and behaving as described. Therefore, after a restart, the device component can request and will receive the current software configuration.

In another embodiment a communication between the device component and the configuration handler is provided by a message queue. In particular, the communication between the configuration handler and the device components might be done by means of a message queue, for example supporting MQTT (message queuing telemetric transport). Using the message queue has the advantage that all the device components do not need to be known in advance or have been registered somewhere. In other terms, new device components can be added by using the mechanism immediately. If a device component mentioned in the package does not exist, a message is published to the message queue but nothing else happens, particularly no failure.

In another embodiment a data package comprising at least the one configuration set up is transmitted from the online network to the backend. Therefore, the configuration setup can be transmitted, for example in a zip-file, and can be transformed for providing the configuration setup for the device components in the device. Therefore, an easy way for transmitting the configuration setup is provided.

In another embodiment the data package may comprise at least one further configuration setup for one further device component of the electronic computing device. Therefore, also the further device component can be configured. In particular, the message queue can be used for providing the configuration setups for each of the device components. Therefore, an easy way for configuration the software is provided.

In another embodiment am message queue is used for distributing each configuration setup to each device component. In particular, the data package may be analyzed by the configuration handler which internally distributes the configuration setups to all device components running on the electronic computing device. The configuration handler may split the configuration data package into parts according to the package structure so that individual configuration files for each device component are obtained. The contents of all the files belonging to the same device component are merged to one file. Therefore, a plurality of device components can be configured in an improved manner.

According to another embodiment a message queue is used for distributing each configuration setup to each device component. In particular, using the message queue has the advantage that all the components do not need to be known in advance or have been registered somewhere. In other terms, new components can be added by using the mechanism immediately. If a component mentioned in the packages does not exist, a message is published to the message queue but nothing else happens, in particular no failure.

According to an embodiment a latest configuration status of the device component is stored by the configuration handler. In particular, the configuration handler also keeps the latest configuration state for each device component. If nothing has changed for a component, in particular determined by using a hash key or similar, the configuration will not be pushed to the respective component. Otherwise the configuration handler puts a message into the message queue with for example a topic that identifies the device component that is supposed to receive it. Therefore, configuring the device component is provided in an improved manner.

According to another embodiment the latest configuration status is compared to a received configuration set up, and if the comparison is equal, transmitting the configuration setup to the device component is suppressed. In other words, just if the comparison is unequal the configuration setup is transmitted to the device component. This has the advantage, that just, if a new configuration setup is available for the device component, this configuration setup is provided for the device component.

In another embodiment the configuration handler generates an identifier for the configuration setup and the configuration setup with the identifier is provided for the device component. Therefore, the device component for example just has to look about the identifier and then may determine, that a configuration setup is provided for the device component. Therefore, each device component may listen to an incoming configuration change in the message queue concerning itself, in particular identified by the identifier, and takes its own configuration part, for example the message payload. Afterwards, the device component can react according to the new configuration, for instance, adjusting some parameters or performing a certain action.

In another embodiment, if the backend is unreachable for the configuration handler and a request of the device component about the configuration setup is received by the configuration handler, the configuration handler provides the latest configuration setup for the device component. Therefore, if the backend service is unreachable for the configuration handler, for example due to network problems, the latest version of the configuration is stored in the configuration handler and is issued, if explicitly asked for the configuration setup by the device component.

In particular, the method is a computer-implemented method. Therefore, another aspect of the invention relates to a computer program product comprising program code means for performing a method according to the preceding aspect.

Furthermore, the present invention relates to a computer-readable storage medium comprising at least the computer program product according to the preceding aspect.

Another aspect of the invention relates to a configuration system for configuring a software installed on a device component of an electronic computing device, comprising at least one backend, wherein the configuration device is configured for performing a method according to the preceding aspect. In particular, the method is performed by the configuration system.

Advantageous embodiments of the method are to be regarded as advantageous embodiments of the computer program product, the computer-readable storage medium, as well as the configuration system. The configuration system therefore comprises means for performing the method.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

A connection of two electrical or electronic components may, unless otherwise expressly stated, be understood such that an electrical connection between the components exists or may be established by operating one or more switching elements (of the circuit/arrangement/device...). In particular, the components may be directly connected or indirectly connected to each other, if not stated otherwise. Therein, a direct connection may be understood such that, except for said optional one or more switching elements, no further electric or electronic components are arranged between the components, while an indirect connection may be understood such that, in addition to said optional one or more switching elements, one or more further electric or electronic components, such as resistors, capacitors, inductors and so on, are arranged between the components.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

The drawings show in
- FIG 1: a schematic block diagram according to an embodiment of a configuration system; and
- FIG 2: another schematic block diagram according to an embodiment of the configuration system.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

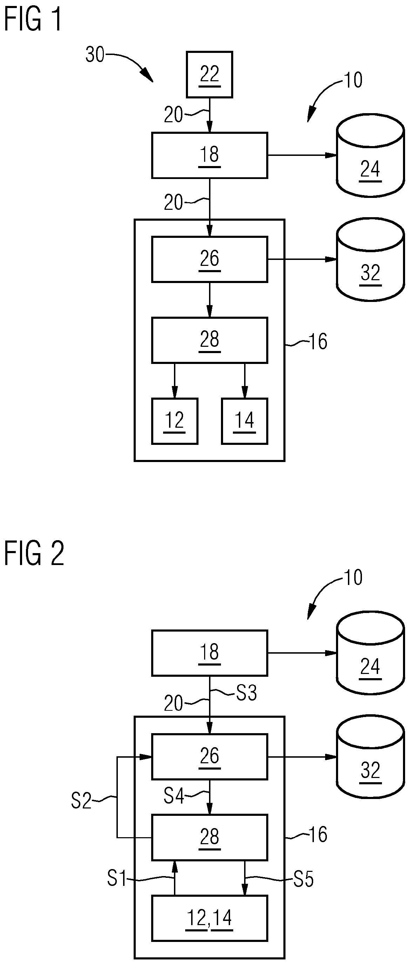

FIG 1 shows a schematic block diagram according to an embodiment of a configuration system 10. The configuration system 10 is for configuring a software installed on a device component 12, 14 of an electronic computing device 16. The configuration system 10 therefore comprises at least one backend 18.

According to an embodiment of a method for configuring a software installed on the device component 12, 14, a configuration setup 20 is provided for the software for the device component 12, 14 by an online network 22. The configuration setup 20 is received and stored by the backend 18 of the configuration system 10. Therefore, for example the backend 18 may comprise a storing device 24. The configuration setup 20 is requested from the backend 18 by a configuration handler 26 of the electronic computing device 16. The configuration setup 20 for the device component 12, 14 is provided by the configuration handler 26. Configuring the device component 12, 14 is performed depending on the provided configuration setup 20 by the device component 12, 14.

In particular, FIG 1 shows that a message queue 28 may be used for communication between the device component 12, 14 and the configuration handler 26.

In particular, FIG 1 shows that the electronic computing device 16 may comprise a first device component 12 and second device component 14.

Furthermore, the configuration handler 26 may request periodically the backend 18 for the configuration setup 20.

Furthermore, the backend 18 may be separately provided to the electronic computing device 16. Furthermore, it is shown that a data package 30 comprising at least the one configuration setup 20 is transmitted from the online network 22 to the backend 18. In particular, the data package 30 may comprise at least one further configuration setup for one further device component, for example the second device component 14, of the electronic computing device 16. Furthermore, the message queue 28 is used for distributing each configuration setup 20 to each device component 12, 14.

Furthermore, a latest configuration status of the device component 12, 14 is stored by the configuration handler 26, wherein therefore the configuration handler 26 may comprise a further storing device 32. Furthermore, the latest configuration status is compared to the received configuration setup 20, and if the comparison is equal, transmitting the configuration setup 20 to the device component 12, 14 is suppressed. Furthermore, if the backend 18 is unreachable for the configuration handler 26 and a request of the device component 12, 14 about the configuration setup 20 is received by the configuration handler 26, the configuration handler 26 provides the latest configuration setup for the device component 12, 14. Therefore, FIG 1 shows that for providing externally configuration the proposed solution is used. There is a new component as the backend 18 running on a separate computer, maybe hosted on a cloud. The backend 18 possesses a publicly available but secured service that can be asked for the configuration setup 20. Furthermore, the configuration setup 20 or the data package 30 for the device component 12, 14 can be sent to the backend service, which then persists the configuration data. The new component configuration handler 26 is installed on the electronic computing device 16 and/or the device component 12, 14 that periodically pulls the configuration setup 20 from the backend 18. A request from the configuration handler 26 to the backend 18 returns not modified whenever a configuration has not been changed, wherein this can be determined by the last modified time stamp. Otherwise, the data package 30 and/or the configuration setup 20 with all configurations for the electronic computing device 16 is returned. As already explained, the configuration handler 26 calls the backend 18 periodically, particularly initially after a restart of the configuration handler 26. Whenever a successful response is received, the data package 30 is analyzed by the configuration handler 26 and internally distributed to all device components 12, 14 running on the electronic computing device 16. The communication between the configuration handler 26 and the device components 12, 14 might be done by means of the message queue 28, for example supporting MQTT. After start-up of a device component 12, 14, the device component 14 may ask for its latest configuration explicitly.

For example, the configuration setup 20 can be stored as a zip file in such a way that it is accessible by the backend 18. The new configuration setup 20 can be placed there. The file package is organized as follows. There is a directory for each device component 12, 14 named like the device component 12, 14. It is assumed that each device component 12, 14 possesses a unique name or identifier. Several files can be put in such a component's directory.

The message queue 28 may be used by the configuration handler 26 to distribute the configurations. The configuration handler 26 splits the data package 30 into parts according to the package structure so that individual configuration files for each device component 12, 14 are obtained. The contents of all the files belonging to the same device component 12, 14 are merged to one file. The configuration handler 26 also keeps the latest configuration state for each device component 12, 14. If nothing has changed for the device component 12, 14, in particular determined by using a hash key or similar, the configuration setup 20 will not be pushed to the respective device component 12, 14. Otherwise, the configuration handler 26 puts a message into the message queue 28 with an identifier for the device component 12, 14 that is supposed to receive it. Each device component 12, 14 listens to incoming configuration changes in the message queue 28 concerning itself, in particular identified by the identifier, and takes its configuration setup 20, for example the message payload. Afterwards, the device component 12, 14 can react according to the new configuration, for instance, adjusting some parameters or performing a certain action.

FIG 2 shows another schematic block diagram according to an embodiment of the configuration system 10. In particular, FIG 2 shows the flow for an explicit request made by the first device component 12. In particular, the device component 12 may submit a request to the message queue 28 in a first step S1. The configuration handler 26 is informed by the message que 28 in a second step S2. In a third step S3, the configuration handler 26 may request the current configuration setup 20 from the backend 18. The configuration handler 26 then forwards the configuration setup 20 in a fourth step S4. The configuration setup S4 is merged in the message queue 28. Then, the fifth step S5 is performed, wherein the device component 12 receives the configuration setup 20 from the message queue 28.

In particular, the shown embodiment may be performed after a restart of the device component 12, 14, wherein the request for the configuration setup 20 is transmitted from the device component 12, 14 to the configuration handler 26.

In particular, FIG 2 shows that each device component 12, 14 may also explicitly ask for its latest configuration, for example after a restart to obtain potential new configurations. Therefore, the device component 12, 14 has to publish a corresponding message to the message queue 28, passing its unique name/identifier. The configuration handler 26 listens to those requests and reacts by issuing a request to the backend 18 and behaving as described before. This scenario is described in FIG 2. If the backend 18 is unreachable by the configuration handler 26, for example due to network problems, the latest version of the configuration setup 20 as stored in the configuration handler 26 is issued if explicitly asked for a configuration by the device component 12, 14. Once the backend 18 is reachable again, the usual mechanism works as described before.

Using the message queue 28 has the advantage that all device components 12, 14 do not need to be known in advance or have been registered somewhere. In other words, new device components 12, 14 can be added by using the mechanism immediately. If a device component 12, 14 mentioned in the package does not exist, the data package 30 does not exist, a message is published in the message queue 28 but nothing else happens, particularly no failure.

The common parts of letting a device component 12, 14 request a configuration at startup and listening to request changes can be placed in a common piece of code, for example by inheritance, so that all the device components 12, 14 can share the logic. The cloud might be beneficial for the backend 18 due to global accessibility and high reliability.

### Reference Signs

- 10: configuration system
- 12: first device component
- 14: second device component
- 16: electronic computing device
- 18: backend
- 20: configuration setup
- 22: online network
- 24: storing device
- 26: configuration handler
- 28: message queue
- 30: data package
- 32: storing device

- S1-S5: steps of the method

## Claims

1. A method for configuring a software installed on a device component (12, 14) of an electronic computing device (16) by a configuration system (10), comprising the steps of:
- providing a configuration setup (20) for the software for the device component (12, 14) by an online network (22);
- receiving and storing the configuration setup (20) by a backend (18) of the configuration system (10);
- requesting the configuration setup (20) from the backend (18) by a configuration handler (26) of the electronic computing device (16);
- providing the configuration setup (20) for the device component (12, 14) by the configuration handler (26); and
- configuring the device component (12, 14) depending on the provided configuration setup (20) by the device component (12, 14) .

2. A method according to claim 1, **characterized in that** the configuration handler (26) requests periodically the backend (18) for the configuration setup (20).

3. A method according to claim 1 or 2, **characterized in that** the backend (18) is separately provided to the electronic computing device (16).

4. A method according to any one of claims 1 to 3,
**characterized in that**
after a restart of the device component (12, 14) a request for the configuration setup (20) is transmitted from the device component (12, 14) to the configuration handler (26).

5. A method according to any one of claims 1 to 4,
**characterized in that**
a communication between the device component (12, 14) and the configuration handler (26) is provided by a message queue (28) .

6. A method according to any one of claims 1 to 5,
**characterized in that**
a data package (30) comprising at least the one configuration setup (20) is transmitted from the online network (22) to the backend (18).

7. A method according to claim 6, **characterized in that** the data package (30) may comprise at least one further configuration setup (20) for one further device component (12, 14) of the electronic computing device (16).

8. A method according to claim 7, **characterized in that** a message queue (28) is used for distributing each configuration setup (20) to each device component (12, 14).

9. A method according to any one of claims 1 to 8,
**characterized in that**
a latest configuration status of the device component (12, 14) is stored by the configuration handler (26).

10. A method according to claim 9, **characterized in that** the latest configuration status is compared to the received configuration setup (20) and if the comparison is equal transmitting the configuration setup (20) to the device component (12, 14) is suppressed.

11. A method according to any one of claims 1 to 10,
**characterized in that**
the configuration handler (26) generates an identifier for the configuration setup (20) and the configuration setup (20) with the identifier is provided for the device component (12, 14) .

12. A method according to any one of claims 1 to 11,
**characterized in that**,
if the backend (18) is unreachable for the configuration handler (26) and request of the device component (12, 14) about the configuration setup (20) is received by the configuration handler (26), the configuration handler (26) provides the latest configuration setup (26) for the device component (12, 14).

13. A computer program product comprising program code means for performing a method according to any one of claims 1 to 12.

14. A computer-readable storage medium comprising at least the computer program product according to claim 13.

15. A configuration system (10) for configuring a software installed on a device component (12, 14) of an electronic computing device (16), comprising at least one backend (18), wherein the configuration system (10) is configured for performing a method according to any one of claims 1 to 12.
